# EUROPEAN PATENT SPECIFICATION

(11) **EP 0 717 916 B1**
(45) Date of publication and mention of the grant of the patent: **30.10.2002**
(21) Application number: 95917862.5
(22) Date of filing: 09.05.1995
(51) Int. Cl.: H04R 1/40, H04R 5/033, H04M 1/05

(54) **A PERSONAL HANDS FREE COMMUNICATIONS DEVICE**
PERSÖNLICHES FREISPRECHFUNKGERÄT
DISPOSITIF DE COMMUNICATION PERSONNEL MAINS LIBRES

(30) Priority: 08.06.1994 US 257254
(43) Date of publication of application: 26.06.1996
(73) Proprietor: Nortel Networks Limited, Montreal, Quebec H2Y 3Y4 (CA)
(72) Inventor: VAN SCHYNDEL, Andre, John, Kanata, Ontario K2K 1K2 (CA); READ, Clifford, Dean, Stittsville, Ontario K2S 1G8 (CA); BEE, James, William, Moore, Ottawa, Ontario K1R 6B4 (CA)
(74) Representative: Bewley, Ewan Stuart
(86) International application number: CA9500275
(87) International publication number: WO95034184

(56) References cited:
- EP-A- 0 390 123
- DE-C- 890 810
- US-A- 3 995 124
- US-A- 4 070 553
- US-A- 5 146 502
- US-A- 5 212 732
- US-A- 5 212 734

## Description

### Field of Invention

This invention relates to personal hands free communication devices.

### Background of the Invention:

Hands free communication devices are used extensively where users are required to use communications devices either for long periods of time or where they require the use of their hands while communicating with others. Examples of such devices are head supported communication devices which are regularly worn by telephone operators, translators, dispatchers, receptionists, and by many radio and television commentators.

Typical hands free communication devices incorporate an apparatus which is supported on a user's head and which have speaker devices either worn in or on an ear(s) of the user. Consumer studies have shown that there is a great resistance by users to head supported devices as they can be uncomfortable and seem heavy if worn for long periods. Furthermore they are conspicuous which is always a concern in professions where the user is in public view such as receptionists and some commentators. Women are also restricted to some degree to those hairstyles which will be compatible with wearing such head supported devices. Speaker devices worn either on or in the ear also tend to be conspicuous and have proven to be uncomfortable when worn regularly by a user and as well many believe that there may be associated health (ear) concerns.

Apparatus for supporting regular every day telephone receivers in a position as they normally would be used i.e. in close proximity relative to the mouth and ear of a user, are widely used in homes and small offices. Although these devices generally are not supported by the head they do restrict movement of a user's neck and head and are obviously conspicuous as they are large in size.

### Statement of the Invention

The present invention seeks to provide an improved hands free communication device.

In accordance with the invention, there is provided a personal hands free communications device comprising signal receiving means for receiving signals from an external source; speaker means for making audible to a user of the device, signals received by the signal receiving means; and support means for supporting and positioning the speaker means next to the neck of a user in a location below an ear of the user, with the ear being within a specific spatial region exteriorly of the speaker means into which the speaker means radiates sound, characterised in that the speaker means has multipole characteristics to be capable of directionally radiating sound mainly into said specific spatial region in a frequency range corresponding to sound wavelengths which are much greater than the largest dimension of the speaker means.

A communication device of the type described in the preamble of claim 1 is, for instance, known from document US-A- 4070553.

Users of a personal hands free communication device in accordance with the invention benefit greatly by realizing a significant increase in comfort as the head of a user is not required to support the device and further more the speaker means is not affixed either in or on the ear. Users of the invention are able to wear the device for longer duration's than conventional head and ear supported devices and as well for those users who are in public view, the device may be worn in a less conspicuous fashion. The device may use conventional wireless technology (i.e. radio technology) or be wired directly to an external communications source and hence the signal receiving means may be a radio receiver or simply a connector for receiving a communication cable.

Providing an arrangement which incorporates a speaker having multipole characteristics provides any user with all the advantages of the invention and further provides the user with degrees of privacy similar to those he may expect when using a conventional head supported device or a conventional handset. Other known directional speakers which depend on speaker geometry, i.e. cones, horns or reflecting surfaces, are only directional in a frequency range having corresponding sound wavelengths which are smaller than or comparable to the characteristic size of the speaker. The characteristic size of a speaker is considered to be the largest dimension of the speaker, i.e. either it's driver's largest dimension or the largest dimension of an associated speaker housing. For example a 334 Hertz (wavelength, lambda = 1 meter) audio signal would require a conventional directional speaker having a characteristic size of about one meter to provide comparable directionality. This would clearly not be practical to hang around the neck of a user.

Multipole speakers on the other hand are directional sound sources which can radiate sound preferably into a specific spatial region exteriorly of the speaker without the use of reflecting surfaces and more specifically are able to do so in a frequency range corresponding to sound wavelengths (*lambda*), which are much, much greater than the characteristic size of the speaker. For convenience, the specific spatial region on each side of the speaker is considered in the terminology of this specification to be in the form of a sound pressure lobe with a directivity pattern. The communications device of the invention, when worn, positions the speaker relative to an ear of a user such that the user is able to directly take advantage of the directionality capabilities of the multipole speaker. The multipole speaker is oriented such that main sound pressure lobes are directed toward a user and away from third parties. In this new application of multipole speakers, privacy is further enhanced as the sound pressure level of multipole speakers attenuates at a faster rate than for regular loudspeakers as the distance from them is increased. For example in conventional speakers (monopole) the sound pressure level attenuates at a rate of 6 dB per doubling of distance in the near field while multipole speakers on the other hand can attenuate at a rate of 12 dB, 18 dB or more per doubling of distance.

Advantageously the communications device comprises a speaker means having multipole characteristics and also signal transmission means for converting acoustical voice energy signals to electrical signals and for transmitting the electrical signals to an external destination. This arrangement provides the user with enhanced privacy and the convenience of two way communication.

Conveniently the speaker means exhibits dipole directivity characteristics.

Dipole loudspeakers exhibit a 'figure eight' directivity pattern thus producing first and second sound pressure lobes extending outward from and substantially in opposite directions from the speaker means and dipoles also exhibit a null zone lying in a plane perpendicular to a central longitudinal axis of the first and second sound pressure lobes. Using a multipole speaker which has a null zone is advantageous as the speaker can be oriented such that in operation one sound pressure lobe may be directed toward the users ear and the other directed downward into the shoulder or chest area of the user while the null zone extends laterally away from the user in the direction of third parties.

Preferably the speaker means exhibits dipole directivity characteristics and comprises a single driver; an elongate housing, the driver being disposed within the elongate housing and in sealing contact with walls of the housing, the housing having substantially open end portions perpendicular to the longitudinal axis of the housing on each side of the driver and wherein the housing extends along this axis beyond the driver by predetermined and substantially equal amounts on both sides of the driver. A single driver dipole significantly reduces manufacturing costs and when used in a hands free communications device, permits the device to be made smaller and lighter which is always a benefit to a user. Providing a housing as defined enables the dipole speaker to provide an increased sound pressure level, for a given input power level, in the direction of the sound pressure lobes.

Advantageously the device comprises a second speaker means which exhibits dipole directivity characteristics and the two speaker means being relatively disposed upon the support means to be positioned one below each ear of the user when the support means is resting on the shoulders and around the neck of the user. Binaural operation permits each speaker to be operated at a lower power level than if just one dipole speaker were used and hence a higher level of privacy may be obtained.

In another preferred arrangement, one speaker means is operable substantially 180 degrees out of phase relative to the other speaker means.

Providing two dipole speaker means positioned on a support means for binaural operation and with one dipole speaker means operating substantially 180 degrees out of phase relative to the other dipole speaker means, the device advantageously exhibits (in the far field) quadrupole characteristics to any third parties and hence offers even a greater degree of privacy to a user (sound pressure levels attenuate at a faster rate than for speakers exhibiting dipole characteristics). The 180 degree out of phase operation may be achieved either electrically or by actually inverting one speaker means relative to the other such that the diaphragm of each driver within one speaker, operates 180 degrees out of phase relative to the diaphragm of each driver within the other speaker. A further advantage is that the user (in the near field) senses a sound which is not localized between the users ears as is the case with two dipole speakers operating in phase relative to each other.

Having the driver in sealing contact with walls of an elongate housing better enables the driver to create a positive volume velocity of air on one side of the driver diaphragm and an equal negative volume velocity of air on the other side of the diaphragm which are requirements of a dipole loudspeaker. Thus an apparent positive velocity source is realized at one end of the elongate housing and an equal (in magnitude) apparent negative velocity source is created at the opposite end of the housing to produce a characteristic dipole directivity pattern having two equal and opposite directional sound pressure lobes. The distance between the apparent positive velocity source and the apparent negative velocity source (in this case the total length of the elongate housing) is important as the loudspeaker is able to provide an increase in sound level (in the direction of the sound pressure lobes) and can be made to be much less than the wavelength (lambda) for corresponding frequencies of interest (the voice band in this application). Extending the housing beyond the driver diaphragm is desirable as the driver is effectively protected and more importantly, a greater sound pressure level is produced in a preferred direction (i.e. in the direction of the sound pressure lobes) for a given input power level. Practical limitations however may determine the amount by which the housing extends past the driver diaphragm. One physical limitation is how large can one make a speaker which will still be acceptable to a user, considering that the speaker is to be positioned between a user's shoulder area and his ear. It is also thought that extending the housing beyond the speaker diaphragm by an amount less than lambda/4 (for wavelengths corresponding to the frequency band of interest) prevents quarter wavelength resonance's from occurring in the housing at which point large undesirable changes in the frequency response of the speaker occur. As well any off centering of the driver diaphragm within the housing will modify the dipole directivity pattern to include undesirable monopole characteristics.

Providing multipole speakers in communications devices which require speakers provides for a less intrusive office environment as multipole speakers are better able to direct reproduced sound in the direction of the user and away from third parties. As well the user realizes an increased level of privacy for example in speaker telephones which incorporate a multipole speaker as the user is able to listen to a caller or voice mail messages in a hands free mode with a greater degree of privacy.

### Brief Description of the Drawings

Various embodiments of the invention will now be described, by reference to the accompanying drawings in which:
Fig. 1 is a front perspective view of a hands free communications device according to a first embodiment and intended for two way communication and is shown as it would be worn by a person shown in chain dot outline;
Fig. 2 is a side perspective view of the first embodiment of Fig. 1;
Fig. 3 is a third perspective view of the hands free communications device of the first embodiment;
Fig. 4 is a cross sectional view of the first embodiment taken along the line IV-IV of Figure 3;
Fig. 5 is a cross-sectional view of a dipole speaker of the hands free communication device of the first embodiment;
Fig. 6 is a view similar to Figure 5 of a dipole speaker of a hands free communication device according to a second embodiment;
Fig. 7 is a side elevational view of a quadrupole speaker of a hands free communication device according to a third embodiment;
Fig. 8 is a graphical representation of directivity characteristics of the dipole speakers of Figures 5 and 6;
Fig. 9 is a graphical representation of directivity characteristics of the quadrupole speaker of Figures 7;
Fig. 10 is a perspective view of a hands free communications device of fourth embodiment;
Fig. 11 is a side view of the embodiment of Figure 10;
Fig. 12 is a perspective view of a hands free communications device of a fifth embodiment;
Fig. 13 is a front perspective view of a hands free communications device of a sixth embodiment and is shown as worn by a person shown in chain dot outline;
Fig. 14 is a front perspective view of a hands free communications device of a seventh embodiment;
Fig. 15 is rearward perspective view of the device in Figure. 14; and
Fig. 16 is a partial side view of the device of Figures 14 and 15.

### Detailed description of the Preferred Embodiment

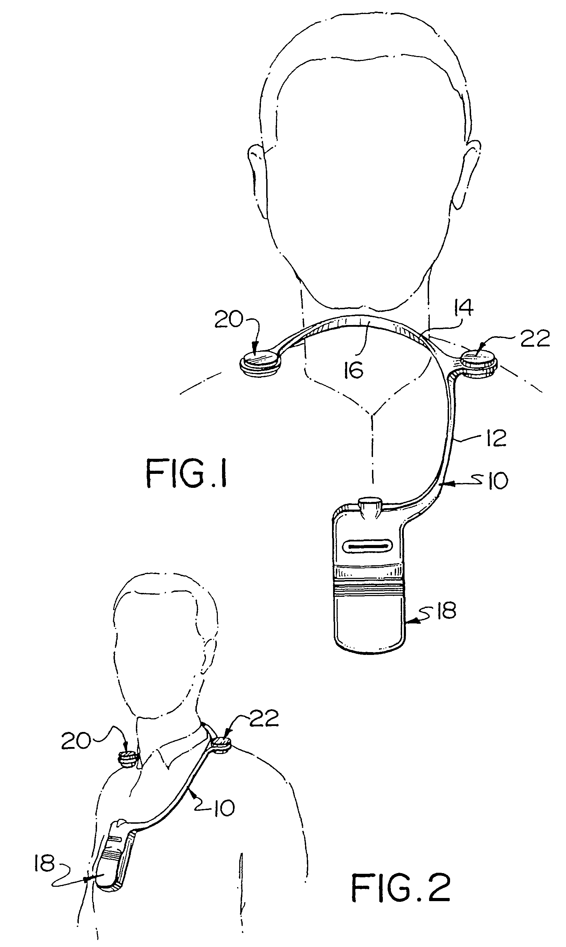

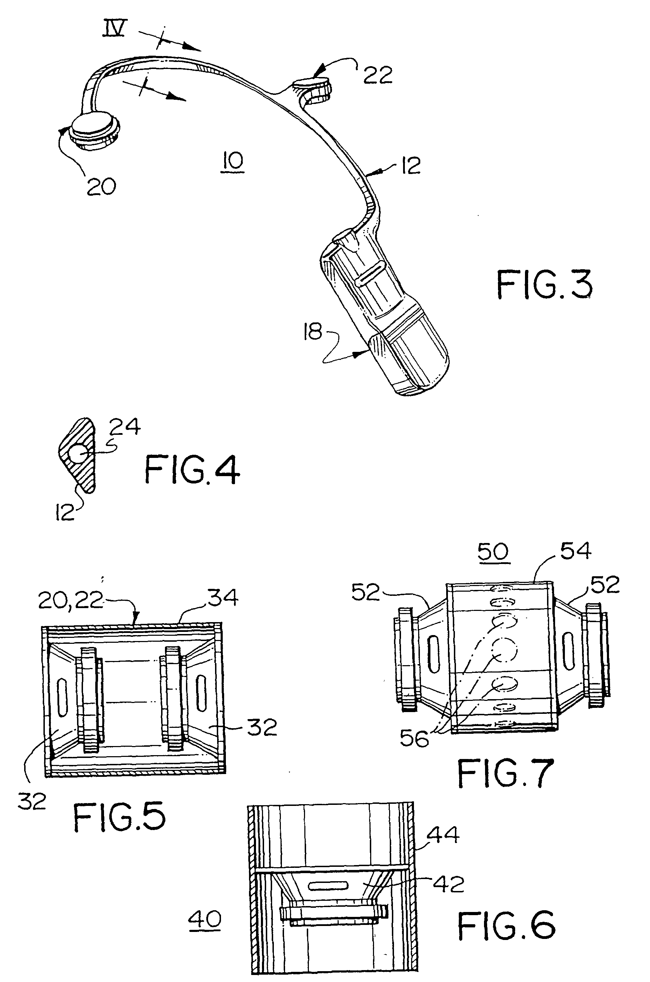

In a first embodiment, a hands free communications device 10 intended for two way communication is illustrated in Figures 1 and 2 in position on a user shown in chain dot. The hands free communications device 10 comprises a semirigid elongate member 12 having a curved end portion 14 for supporting the device over the shoulders and around the neck of a user. The curved end portion 14 incorporates an inside surface 16 which is designed to contact a rear portion of the users neck to make the device comfortable to wear. The substantially flat inside surface 16 in section is suitable for comfort as is shown by Fig. 4. A conventional transducer for converting acoustical voice energy to electrical signals, along with a radio transmitter, radio receiver and power source are conveniently packaged in a small chest receptacle 18 which depends from the elongate member 12. A speaker means comprises a first dipole speaker 20 disposed on a free end of the curved end portion 14 and a second dipole speaker 22 positioned on the elongate member 12 directly across from the first dipole speaker 20. All required electrical connections between electronics housed in the chest receptacle 18 and the dipole speakers 20,22 can be realized by running connection wiring (not shown) through a hollow passage 24 internal to the rigid elongate member 12 as seen in Figure 4. An antenna (not shown) for the radio receiver is also housed within the hollow passage 24. Each dipole speaker 20,22 is oriented relative to the elongate member 12 such that when worn by a user the dipole speakers are directed toward a respective ear of the user as shown in figures 1 and 2. Each dipole speaker may be supported on a lockable pivot arm (not shown) to provide the user with further individual adjustment of each speaker relative to the elongate member 12. Each dipole speaker 20,22 is operable 180 degrees out of phase with respect to the other. This may be achieved either electrically (by altering the polarity of each dipole speaker) or by having both dipole speakers electrically wired to effectively be in phase and physically inverting one dipole speaker. Both methods result in one dipole speaker at any point in time moving air in an opposite direction to that of the other dipole speaker to produce two dipoles operating 180 degrees out of phase relative to each other. It has been found that a user having two dipole speakers operating in this manner senses a sound which is not localized between the user's ears and more importantly the two dipoles have a directivity pattern which resembles that of a quadrupole (in the far field) which is advantageous for privacy as sound pressure levels attenuate at a faster rate than for dipole speakers.

In operation, a user simply places the device around his neck and operates a power switch (not shown) to turn on the hands free communications device. Once the device is turned on a user may communicate with a remote location. The radio receiver in the chest receptacle 18 receives radio signals from a remote location via the antenna which is housed in the hollow passage 24. The receiver then processes the received signals and drives the two dipole speakers 20,22 to generate received acoustical voice signals. Each dipole speaker is positioned relative to the user to take advantage of it's directional characteristics. One sound pressure lobe is directed toward the users ear while the second sound pressure lobe is directed downward at the users body (shoulder/chest area). The associated null zone advantageously extends laterally away from the user to help inhibit reception of the received acoustical voice signals by others in the near vicinity of the user.

As the communications device is not worn on the head of a user nor are the speakers supported either on or in the ear, the device can be comfortably worn for extended periods of time. In practice the device may be extremely light and as it is supported by the full length of the elongate member 12 upon the neck, shoulders and chest of the user the weight is largely unnoticeable. The use of multipole speakers provides the communications device with a further degree of privacy by taking advantage of their size and directional capabilities at frequencies within the voice band. Also, in the embodiment, the use of radio technology for reception and transmission provides complete freedom of movement of the user within operational range.

Tests have shown that one end of the speaker housing can be partially obstructed by being in contact with a users shoulder or clothing and the dipole speaker will still produce satisfactory directional sound capabilities.

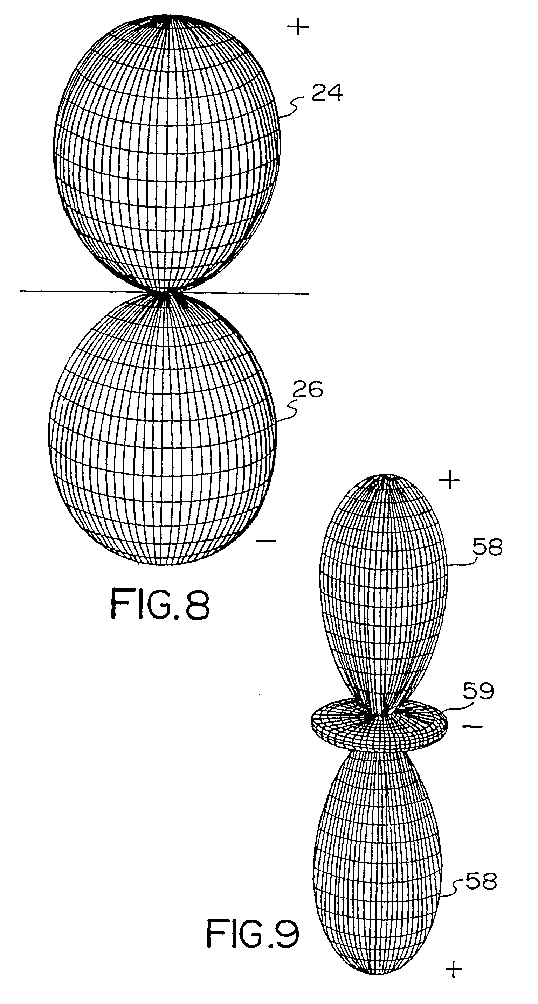

In use each speaker 20,22 produces a sound directivity pattern graphically illustrated in Figure 8. Dipole loudspeakers exhibit a 'figure eight' directivity pattern thus producing one positive and one negative sound pressure lobe 26,28 respectively. Each sound pressure lobe extends outward from and in opposite directions from the speaker i.e. axially away from the speakers. Dipoles also exhibit a null zone lying in a plane perpendicular to a central longitudinal axis of the positive and negative sound pressure lobes.

In the first embodiment, each speaker 20,22 is a two driver dipole speaker is shown in Figure 5. Each driver 32 is disposed within and at one end of a cylindrical housing 34. Each driver 32 is also in sealing contact with walls of the housing 34 and for substantially the same reasons as mentioned earlier in the specification, the overall length of the housing has practical limitations and preferably should be less than lambda/4; where lambda corresponds to the wavelength of the highest operating frequency (e.g. 3400 Hz for the telephony voice band). The speakers are in practice of small size to fit comfortably upon the elongate member 12 and also to be comfortable to the user. Drivers having a diameter of about 2.8 cm disposed within a cylindrical housing having an overall length of 2.4 cm have been satisfactorily used in the embodiment.

Other orientations of drivers within the housing 34 are acceptable (i.e. both facing inward, both facing outward, one facing in and one facing out). The requirement being for dipole operation that the diaphragms of respective drivers move in phase relative to each other. For the two driver dipole speaker in Figure 5 for example (both drivers facing outward), each driver must be electrically wired to operate 180 degrees out of phase to effectively have respective speaker diaphragms operating in phase (i.e. one driver diaphragm moves outward of the housing while the other driver diaphragm moves inward).

In a second embodiment which is otherwise similar to the first embodiment, the speakers 20,22 are replaced by two single driver dipole speakers 40 shown in Figure 6. Each single driver dipole speaker 40 has a single driver 42 disposed within and midway along a cylindrical housing 44. The driver is also in sealing contact with walls of the housing 44 and for the same reasons as mentioned earlier in the specification, the length of the housing extending beyond the driver diaphragm has practical limitations and preferably should be less than lambda/4; where lambda corresponds to the wavelength of the highest operating frequency (e.g. 3400 Hz for the voice band). The driver diaphragm requires accurate location as any off centering of the driver diaphragm within the housing will modify the dipole directivity pattern to include undesirable monopole characteristics. A driver having a diameter of about 2.8 cm disposed within a cylindrical housing (as shown in Fig. 6) having an overall length of 2.4 cm has been satisfactorily used.

In a third embodiment which is otherwise similar to the first embodiment, the speakers 20,22 are replaced by two quadrupole loudspeakers 50 shown in Figure 7. The quadrupole loudspeaker of Figure 7 exhibits a characteristic sound directivity pattern which is graphically illustrated in Figure 9. The directivity pattern has two positive sound pressure lobes 58, each positive lobe 58 extending outward from the speaker 50 and in opposite directions as well as a small torroidally shaped negative lobe 59 centrally located between the two positive lobes 58 and extending in a perpendicular direction relative to the two positive lobes. The quadrupole speaker of Figure 7 does not exhibit a null zone but does exhibit positive sound pressure lobes 58 which have a significantly narrower beam width than the positive and negative lobe of the dipole directivity pattern (Fig. 8). The narrower beam width capability of the quadrupole speaker may be used to better direct reproduced sound at the user and hence away from third parties.

Each driver 52 of the quadrupole loudspeaker of Figure 7, is disposed within and at one end of a cylindrical housing 54 (drivers and housing are of comparable size to those of the previous embodiments). Each driver 52 is in sealing contact with walls of the housing 54 and the overall length of the housing has practical limitations as mentioned previously and preferably should be less than lambda/4; where lambda corresponds to the wavelength of the highest operating frequency (e.g. 3400 Hz for the telephony voice band). The housing 54 incorporates a plurality of small apertures or ports 56 extending around a mid section of the housing 54 to permit air flow into and out of the housing 54. The quadrupole speaker 50 of Figure 7 (having drivers 52 oriented as shown), to produce the directivity pattern shown in Figure 9, must be electrically wired such that diaphragms of respective drivers 52 operate 180 degrees out of phase relative to each other. Therefore, as each diaphragm moves a given volume of air outward and away from the housing (thus producing two positive sound pressure lobes), twice the given volume of air enters the inside of the housing 52 through ports 56 (thus producing the negative torroid shaped lobe 59 of Fig. 9).

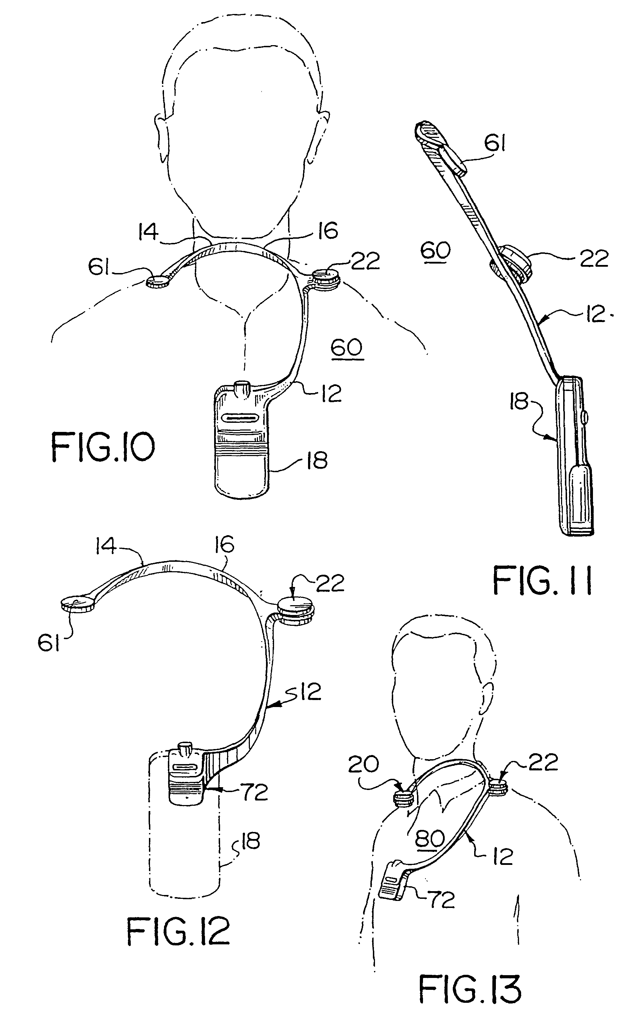

In the above embodiments, two speakers have been included. However, one speaker only may be used for instance as shown in a fourth embodiment in Figures 10 and 11. The fourth embodiment of Figure 10,11 is similar to the first embodiment of Figure 1 and has the same reference numerals for similar parts. However in Figure 10,11 the loud speaker 20 is eliminated, thereby providing only loudspeaker 22. In the position of loudspeaker 20, the end of curved end portion 14 is provided with an integral round button 15 to avoid sharpness.

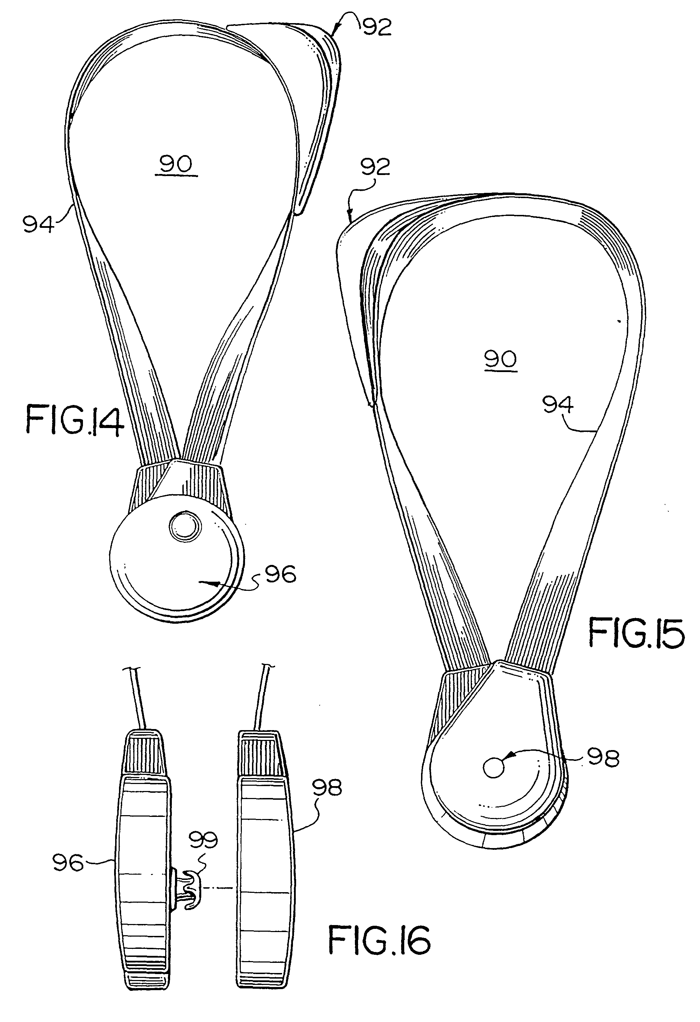

A fifth embodiment of a hands free communications device 70 intended for those applications which only require one way communication (e.g. translators) is illustrated in Figures 12 and 13. The structure of the hands free communications device 70 of Figure 12 is identical to that of the fourth embodiment of Figure 10 and 11 except for having a significantly smaller chest receptacle. As the device 70 in this embodiment is only capable of one way communication (i.e. receiving signals only) the chest receptacle 18 shown in chain dot, is replaced by a smaller chest receptacle 72 which only need house a radio receiver for example.

A hands free communications device 80 according to sixth embodiment is illustrated in Figure 13. The structure of the hands free communications device 80 of Figure 13 is identical to that of the fifth embodiment of Figure 12 except for having two speakers 20,22.

In a hands free communications device 90 of a seventh embodiment, illustrated in Figures 14, 15 and 16; a support means comprises a flexible web 94 for supporting the device around the neck of a user in necklace fashion. A single speaker 92 is disposed on a portion of the flexible web 94 and the chest receptacle 18,72 of previous embodiments is replaced with a front receptacle 96 and a rear receptacle 98 disposed at respective ends of the flexible web 94. To facilitate putting on or removing the device from the neck of the user, the front receptacle 96 and the rear receptacle 98 are releasably held together with a snap connector 99. The flexible web 94 may be constructed from electrical ribbon cable and any electrical connections between speaker 92 and the chest receptacles 96,98 may be made via internal wires within the ribbon cable.

The chest receptacles on all of the embodiments already described may be further reduced in size and cost for those applications where the user is basically stationary (e.g. operators, receptionists) by placing the electronics previously housed within the chest receptacle 18,26,96,98 in a separate housing to be placed in the vicinity of the user and providing an appropriate wired connection between a connector (not shown) on the hands free communications device and the separate housing.

Multipole speakers such as described above and shown for example in Figures 5, 6, or 7 have other uses from those described above. For instance in further embodiments, they may be used as speakers in speaker telephones which permits a user of the telephone to listen to either a caller or voice mail messages in a hands free mode. With these constructions, the speakers are mounted to direct sound into a specific spatial region conveniently located for alignment with a user's ear with the telephone set in a normal use position.

In still further embodiments, multipole speakers, are used in other personal hands free communications devices, for example terminals, personal computers etc. with the speakers oriented to direct sound into a specific spatial region within which a user's ear would be located.

Numerous modifications, variations and adaptations may be made to the particular embodiments of the invention described above without departing from the scope of the invention, which is defined in the claims.

## Claims

1. A personal hands free communications device comprising:
signal receiving means for receiving signals from an external source;
speaker means (20,22;40;50;92) for making audible to a user of the device (10;60;70;80;90), signals received by the signal receiving means; and
support means (12;94) for supporting and positioning the speaker means next to the neck of a user in a location below an ear of the user, with the ear being within a specific spatial region exteriorly of the speaker means into which the speaker means radiates sound, **characterised in that** the speaker means has multipole characteristics to be capable of directionally radiating sound mainly into said specific spatial region in a frequency range corresponding to sound wavelengths which are much greater than the largest dimension of the speaker means.

2. A personal hands free communications device as claimed in claim 1, the device further comprising signal transmission means disposed on the support means (12;94) for converting acoustical voice energy signals to electrical signals and for transmitting the electrical signals to an external destination.

3. A personal hands free communications device as claimed in claim 1 or 2, wherein the speaker means (20,22;50) exhibits dipole directivity characteristics.

4. A personal hands free communications device as claimed in claim 3 wherein the speaker means (20,22;50) comprises first and second drivers (32;52), each having a driver diaphragm, and being operable such that the first driver diaphragm moves in phase with respect to the diaphragm of the second driver.

5. A personal hands free communications device as claimed in claim 3, wherein the speaker means (40) comprises a single driver (42) and an elongate housing (44), the driver being disposed within the elongate housing and in sealing contact with walls of the housing, the housing having a substantially open end portion perpendicular to the longitudinal axis on each side of the driver and wherein the housing extends along this axis beyond the driver by predetermined and substantially equal amounts on both sides of the driver.

6. A personal hands free communications device as claimed in any one of claims 1 to 5, wherein the support means comprises a substantially rigid elongate member (12) having a longitudinally curved portion (14) and being curved generally in a single direction so as to be capable of extending around the neck and over the shoulders of the user, the curved portion being capable of comfortably supporting the device around the neck of a user.

7. A personal hands free communications device as claimed in any one of claims 1 to 5, wherein the support means comprises a flexible elongate member (94) and wherein the device further comprises means (99) for connecting respective ends of the flexible elongate member together such that the device may be worn by the user in necklace fashion.

8. A personal hands free communications device as claimed in claim 7, wherein the flexible elongate member (94) has a plurality of internal conductors which are used to provide electrical connection paths between the speaker means (92) and the signal receiving means.

9. A personal hands free communications device as claimed in any one of claims 3 to 5, wherein the device further comprises a second speaker means (20) which exhibits dipole directivity characteristics, the two speaker means (20,22) being relatively disposed upon the support means (12) to be positioned one below each ear of the user when the support means is resting on the shoulders and around the neck of the user.

10. A personal hands free communications device as claimed in claim 9, wherein one speaker means (20,22) is operable in phase with the other speaker means.

11. A personal hands free communications device as claimed in claim 9, wherein one speaker means (20,22) is operable substantially 180 degrees out of phase relative to the other speaker means.

12. A personal hands free communications device as claimed in claim 11, wherein the out of phase operation is achieved by physically orienting one speaker means capable of dipole operation substantially inverted relative to the second speaker means, also capable of dipole operation.

13. A personal hands free communications device as claimed in claim 6, wherein the signal receiving means is disposed at one end of the rigid elongate member.

14. A personal hands free communications device as claimed in claim 7, wherein the signal receiving means is disposed at one end of the flexible elongate member.

## Patentansprüche

1. Persönliches Freihand-Kommunikationsgerät mit:
einer Signalempfangseinrichtung zum Empfang von Signalen von einer externen Quelle;
einer Schallwandlereinrichtung (20, 22; 40; 50; 92), um von der Signalempfangseinrichtung empfangene Signale für einen Benutzer des Gerätes (10; 60; 70; 80; 90) hörbar zu machen; und
einer Halterungseinrichtung (12; 94) zur Halterung und Positionierung der Schallwandlereinrichtungen in der Nähe des Halses eines Benutzers an einer Stelle unterhalb eines Ohres des Benutzers, wobei sich das Ohr innerhalb eines bestimmen räumlichen Bereiches außerhalb der Schallwandlereinrichtung befindet, in die die Schallwandlereinrichtung Schall abstrahlt, **dadurch gekennzeichnet, daß** die Schallwandlereinrichtung eine Mehrpol-Charakteristik aufweist, um in der Lage zu sein, Schall hauptsächlich in den bestimmten räumlichen Bereich in einem Frequenzbereich gerichtet abzustrahlen, der Schallwellenlängen entspricht, die wesentlich größer als die größte Abmessung der Schallwandlereinrichtungen sind.

2. Persönliches Freihand-Kommunikationsgerät nach Anspruch 1, wobei das Gerät weiterhin eine Signalübertragungseinrichtung aufweist, die auf den Halterungseinrichtungen (12; 94) angeordnet ist, um akustische Sprachenergie-Signale in elektrische Signale umzuwandeln und um die elektrischen Signale zu einem externen Ziel zu senden.

3. Persönliches Freihand-Telekommunikationsgerät nach Anspruch 1 oder 2, bei dem die Schallwandlereinrichtung (20, 22; 50) Dipol-Richtdiagramme aufweist.

4. Persönliches Freihand-Kommunikationsgerät nach Anspruch 3, bei dem die Schallwandlereinrichtung (20, 22; 50) erste und zweite Treiber (32; 52) aufweist, die jeweils Treibermembranen aufweisen und derart betreibbar sind, daß sich die erste Treibermembran gleichphasig bezüglich der Membran des zweiten Treibers bewegt.

5. Persönliches Freihand-Kommunikationsgerät nach Anspruch 3, bei dem die Schallwandlereinrichtung (40) einen einzelnen Treiber (42) und ein langgestrecktes Gehäuse (44) einschließt, wobei der Treiber im Inneren des langgestreckten Gehäuses und in Dichtungsberührung mit den Wänden des Gehäuses angeordnet ist, wobei das Gehäuse einen im wesentlichen offenen Endabschnitt senkrecht zur Längsachse auf jeder Seite des Treibers aufweist, und wobei sich das Gehäuse entlang dieser Achse über den Treiber hinaus über vorgegebene und im wesentlichen gleiche Beträge an beiden Seiten des Treibers erstreckt.

6. Persönliches Freihand-Kommunikationsgerät nach einem der Ansprüche 1 bis 5, bei dem die Halterungseinrichtung ein im wesentlichen starres langgestrecktes Element (12) mit einem in Längsrichtung gekrümmten Abschnitt (14) aufweist, der allgemein in einer einzigen Richtung gekrümmt ist, so daß er sich um den Hals und über die Schultern des Benutzers erstrecken kann, wobei der gekrümmte Abschnitt in der Lage ist, das Gerät bequem um den Hals eines Benutzers zu haltern.

7. Persönliches Freihand-Kommunikationsgerät nach einem der Ansprüche 1-5, bei dem die Halterungseinrichtung ein flexibles langgestrecktes Element (94) aufweist, und wobei das Gerät weiterhin Einrichtungen (99) zum Verbinden jeweiliger Enden des flexiblen langgestreckten Elementes miteinander derart umfaßt, daß das Gerät um den Hals des Benutzers in Form eines Halsbandes getragen werden kann.

8. Persönliches Freihand-Kommunikationsgerät nach Anspruch 7, bei dem das flexible langgestreckte Element (94) eine Vielzahl von innenliegenden Leitern aufweist, die zur Schaffung elektrischer Verbindungspfade zwischen den Schallwandlereinrichtungen (92) und den Signalempfangseinrichtungen verwendet werden.

9. Persönliches Freihand-Kommunikationsgerät nach einem der Ansprüche 3-5, bei dem das Gerät weiterhin eine zweite Schallwandlereinrichtung (20) aufweist, die Dipol-Richteigenschaften aufweist, wobei die beiden Schallwandlereinrichtungen (20, 22) relativ zueinander auf den Halterungseinrichtungen (12) derart angeordnet sind, daß jeweils eine unterhalb eines Ohres des Benutzers angeordnet ist, wenn die Halterungseinrichtung auf den Schultern und um den Hals des Benutzers herum ruht.

10. Persönliches Freihand-Kommunikationsgerät nach Anspruch 9, bei dem eine Schallwandlereinrichtung (20, 22) gleichphasig mit der anderen Schallwandlereinrichtung betreibbar ist.

11. Persönliches Freihand-Kommunikationsgerät nach Anspruch 9, bei dem eine Schallwandlereinrichtung (20, 22) im wesentlichen um 180° Grad phasenverschoben gegenüber der anderen Schallwandlereinrichtung betreibbar ist.

12. Persönliches Freihand-Kommunikationsgerät nach Anspruch 11, bei dem der phasenverschobene Betrieb dadurch erzielt wird, daß eine für einen Dipol-Betrieb fähige Schallwandlereinrichtung mechanisch im wesentlichen umgekehrt zu der zweiten Schallwandlereinrichtung angeordnet wird, die ebenfalls zu einem Dipol-Betrieb fähig ist.

13. Persönliches Freihand-Kommunikationsgerät nach Anspruch 6, bei dem die Signalempfangseinrichtung an einem Ende des starren langgestreckten Elementes angeordnet ist.

14. Persönliches Freihand-Kommunikationsgerät nach Anspruch 7, bei dem die Signalempfangseinrichtung an einem Ende des flexiblen langgestreckten Elementes angeordnet ist.

## Revendications

1. Dispositif de communication mains libres à usage individuel comprenant :
des moyens de réception des signaux permettant de recevoir un signal afin de recevoir des signaux provenant d'une source extérieure ;
des moyens de conversion acoustique (20 ; 22 ; 40 ; 50 ; 92) permettant de rendre audible pour l'utilisateur du dispositif (10 ; 60 ; 70 ; 80 ; 90), des signaux reçus par les moyens de réception des signaux ; et
des moyens de support (12 ; 94) permettant de supporter et de positionner les moyens de conversion acoustique dans une zone à proximité du cou et sous l'oreille d'un utilisateur, l'oreille étant située dans une région spatiale spécifique à l'extérieur des moyens de conversion acoustique dans laquelle les moyens de conversion acoustique émettent un rayonnement acoustique, **caractérisé en ce que** les moyens de conversion acoustique ont des caractéristiques multipolaires pour pouvoir émettre de manière directionnelle un rayonnement acoustique, principalement dans ladite région spatiale spécifique dans une gamme de fréquences correspondant à des longueurs d'onde sonores qui sont nettement supérieures à la dimension la plus grande des moyens de conversion acoustique.

2. Dispositif de communication mains libres à usage individuel selon la revendication 1, ce dispositif comprenant en outre des moyens de transmission des signaux disposés sur les moyens de support (12 ; 94) pour convertir des signaux d'énergie vocale acoustique en signaux électriques et pour transmettre ces signaux électriques à une destination extérieure.

3. Dispositif de communication mains libres à usage individuel selon la revendication 1 ou 2, dans lequel les moyens de conversion acoustique (20, 22 ; 50) présentent des caractéristiques de directivité dipolaire.

4. Dispositif de communication mains libres à usage individuel selon la revendication 3 dans lequel les moyens de conversion acoustique (20, 22; 50) comprennent un premier et un deuxième circuit d'attaque (32 ; 52), chacun ayant une membrane de circuit d'attaque, et pouvant fonctionner de telle sorte que la membrane du premier circuit d'attaque se déplace en phase avec la membrane du deuxième circuit d'attaque.

5. Dispositif de communication mains libres à usage individuel selon la revendication 3, dans lequel les moyens de conversion acoustique (40) comprennent un circuit d'attaque unique (42) et un boîtier étiré (44), le circuit d'attaque étant disposé à l'intérieur du boîtier étiré et en contact hermétique avec les parois du boîtier, le boîtier ayant à son extrémité une partie substantiellement ouverte perpendiculaire à l'axe longitudinal de part et d'autre du circuit d'attaque et dans laquelle le boîtier se prolonge le long de cet axe au-delà du circuit d'attaque d'une longueur prédéterminée et substantiellement égale des deux côtés du circuit d'attaque.

6. Dispositif de communication mains libres à usage individuel selon l'une des revendications 1 à 5, dans lequel les moyens de support comprennent un élément allongé substantiellement rigide (12) ayant une partie incurvée longitudinalement (14) et qui est généralement incurvée dans une seule direction de manière à pouvoir se déployer autour du cou et par-dessus les épaules de l'utilisateur, la partie incurvée pouvant supporter confortablement le dispositif autour du cou d'un utilisateur.

7. Dispositif de communication mains libres à usage individuel selon l'une quelconque des revendications 1 à 5, dans lequel les moyens de support comprennent un élément allongé flexible (94) et dans lequel le dispositif comprend en outre des moyens (99) permettant de raccorder entre elles les extrémités respectives de l'élément allongé flexible de manière à ce que le dispositif puisse être porté par l'utilisateur à la manière d'un collier.

8. Dispositif de communication mains libres à usage individuel selon la revendication 7, dans lequel l'élément allongé flexible (94) a une pluralité de conducteurs internes qui permettent de fournir des chemins de raccordement électrique entre les moyens de conversion acoustique (92) et les moyens de réception des signaux.

9. Dispositif de communication mains libres à usage individuel selon l'une quelconque des revendications 3 à 5, dans lequel le dispositif comprend en outre un deuxième moyen de conversion acoustique (20) qui présente des caractéristiques de directivité dipolaire, les deux moyens de conversion acoustique (20, 22) étant disposés relativement sur les moyens de support (12) de sorte que chacun d'eux soit positionné sous chaque oreille de l'utilisateur lorsque les moyens de support reposent sur les épaules et autour du cou de l'utilisateur.

10. Dispositif de communication mains libres à usage individuel selon la revendication 9, dans lequel un des moyens de conversion acoustique (20, 22) est capable de fonctionner en phase avec l'autre.

11. Dispositif de communication mains libres à usage individuel selon la revendication 9, dans lequel un des moyens de conversion acoustique (20, 22) est capable substantiellement de fonctionner avec un décalage de phase de 180 ° par rapport à l'autre.

12. Dispositif de communication mains libres à usage individuel selon la revendication 11, dans lequel le fonctionnement en décalage de phase est obtenu en orientant physiquement un des moyens de conversion acoustique capable de réaliser un fonctionnement dipolaire substantiellement inversé par rapport au deuxième moyen de conversion acoustique, lui aussi capable d'un fonctionnement dipolaire.

13. Dispositif de communication mains libres à usage individuel selon la revendication 6, dans lequel les moyens de réception des signaux sont disposés à une extrémité de l'élément allongé rigide.

14. Dispositif de communication mains libres à usage individuel selon la revendication 7, dans lequel les moyens de réception des signaux sont disposés à une extrémité de l'élément allongé flexible.
